# FASCICULE DE BREVET EUROPEEN

(11) **EP 3 594 976 B1**
(45) Date de publication et mention de la délivrance du brevet: **03.08.2022**
(21) Numéro de dépôt: 19177974.3
(22) Date de dépôt: 03.06.2019
(51) Int. Cl.: H01H 1/00, H01H 1/50

(54) **PROCÉDÉ DE DÉTECTION D'UNE PRESSION DE CONTACT INSUFFISANTE DANS UN APPAREIL DE COUPURE, DISPOSITIF POUR LA MISE EN OEUVRE D'UN TEL PROCÉDÉ, ET APPAREIL DE COUPURE COMPORTANT UN TEL DISPOSITIF**
VERFAHREN ZUR ERKENNUNG EINES UNZUREICHENDEN KONTAKTDRUCKS IN EINEM STROMUNTERBRECHUNGSGERÄT, VORRICHTUNG ZUR UMSETZUNG DIESES VERFAHRENS UND DIESE VORRICHTUNG UMFASSENDES STROMUNTERBRECHUNGSGERÄT
METHOD FOR DETECTING INSUFFICIENT CONTACT PRESSURE IN A SWITCHGEAR, DEVICE FOR IMPLEMENTING SUCH A METHOD, AND SWITCHGEAR COMPRISING SUCH A DEVICE

(30) Priorité: 12.07.2018 FR 1856445
(43) Date de publication de la demande: 15.01.2020
(73) Titulaire: Schneider Electric Industries SAS, 92500 Rueil Malmaison (FR)
(72) Inventeur: GARAVELLI, Jordane, 38050 GRENOBLE (FR); BECKER, Steeve, 38050 GRENOBLE (FR)
(74) Mandataire: Schneider Electric

(56) Documents cités:
- EP-A1- 1 555 683
- EP-A1- 2 584 575
- US-A1- 2017 047 184

## Description

### DOMAINE TECHNIQUE

La présente invention concerne un procédé de détection d'une pression de contact insuffisante entre les deux contacts d'un appareil de coupure électrique, ledit appareil comportant des moyens de réarmement du mécanisme de commande de l'appareil de coupure après une fermeture du mécanisme, ces moyens comportant des moyens de compression d'un ressort de fermeture destiné à amener le mécanisme de commande de l'appareil dans une position dans laquelle il est prêt à fermer, ces moyens de réarmement comportant également une motorisation, apte à terminer la manœuvre de fermeture du mécanisme de commande, en cas de fermeture incomplète réalisée par ce dernier et avant de réaliser le réarmement, cette insuffisance de pression de contact étant due à une usure du mécanisme, de la cinématique, de la motorisation, des pièces impliquées dans la compression du ressort de fermeture, ou d'une fermeture incomplète indépendante de toute usure, par exemple lors de basses températures qui font que les graisses se figent.

La présente invention concerne également un dispositif de détection pour la mise en œuvre de ce procédé, ainsi qu'un appareil de coupure tel un disjoncteur comportant un tel dispositif.

### ETAT DE LA TECHNIQUE

On connaît un dispositif de manœuvre de disjoncteurs tel que décrit dans le document EP0 221 430, permettant d'effectuer un cycle rapide d'ouverture, de fermeture et de réouverture d'un disjoncteur, dit communément cycle OFO, le disjoncteur comprenant un ensemble de contacts fixes et un ensemble de contacts mobiles, une tige de manœuvre destinée à être reliée audit ensemble de contacts mobiles, un premier ressort communiquant lorsqu'il se détend, un mouvement à la tige dans le sens correspondant à l'ouverture du disjoncteur, un second ressort communiquant lorsqu'il se détend un mouvement à la tige dans le sens correspondant à la fermeture du disjoncteur, ledit dispositif comprenant des moyens pour que la détente du second ressort entraîne le réarmement du premier ressort, chacun desdits ressorts étant associé à un organe de verrouillage commandable.

Dans de tels disjoncteurs, le mécanisme de commande doit toujours être réarmé après une fermeture.

Ces appareils peuvent subir des phénomènes variés tels qu'une utilisation très fréquente, de la corrosion, une utilisation à basse température, etc...Ces conditions peuvent entraîner une détérioration de l'appareil, notamment une usure du mécanisme, de la cinématique, de la motorisation ou spécifiquement des pièces permettant la compression du ressort de fermeture.

Cette usure du mécanisme, de la cinématique, ou une utilisation à basse température, vont entraîner une fermeture incomplète des contacts de l'appareil lors d'une manœuvre de fermeture de l'appareil. Cette fermeture incomplète entraîne une pression de contact partielle dans les ampoules à vide, et plus largement, des organes de coupure.

Lorsque le mécanisme est du type OFO à came, c'est-à-dire un mécanisme permettant de réaliser une fermeture rapide de l'appareil (0,3s) après une ouverture de celui-ci, ledit mécanisme comportant des moyens de transmission à came situés entre l'arbre lié au ressort de fermeture et l'arbre lié aux pièces de la cinématique entraînant les contacts mobiles, et lorsqu'une fermeture du mécanisme est incomplète, celle-ci est achevée par la motorisation lors du réarmement qui suit la fermeture. Ceci ne pose pas de problème lorsqu'une telle fermeture est réalisée sur un courant nominal. Si le courant est plus élevé, l'existence de cette pression de contact partielle avant la fermeture complète par la motorisation, peut conduire à un échauffement voire à une destruction si le niveau de courant atteint le niveau de courte durée admissible ou s'il y a court-circuit.

Lorsque le réarmement n'est pas réalisé par une motorisation, les problèmes dus à une fermeture incomplète énoncés ci-dessus surviennent même lors d'une fermeture sur courant nominal.

Il est important de détecter les usures précitées et la fermeture incomplète, parce que cela permet d'alerter de la nécessité de réaliser une maintenance et/ou de mieux protéger l'appareil des conditions environnementales.

On connaît des appareils de coupure comportant des moyens permettant de donner une information concernant le trajet réel des contacts mobiles, ceci permettant de détecter l'existence d'une usure des contacts et de communiquer l'information in situ, via notamment des moyens de signalisation lumineux, ou à distance, via un signal électrique. Ces moyens ne permettent cependant pas de détecter les usures précitées et la fermeture incomplète des contacts.

On connaît le document US2017/047184 décrivant un procédé de détection d'une pression de contact insuffisante selon le préambule de la revendication 1.

### EXPOSE DE L'INVENTION

La présente invention résout ces problèmes et propose un procédé de détection de l'usure du mécanisme, de la cinématique, de la motorisation ou des pièces permettant la compression du ressort de fermeture, ainsi qu'une fermeture incomplète, ces procédés permettant de distinguer une usure du mécanisme, de la cinématique, une fermeture incomplète indépendante de toute usure, d'une usure de la motorisation ou des pièces spécifiques du mécanisme permettant la compression du ressort de fermeture.

L'invention a encore pour objet un dispositif pour la mise en œuvre de ce procédé, ainsi qu'un appareil de coupure électrique comportant un tel dispositif.

A cet effet, la présente invention a pour objet un procédé de détection selon la revendication 1.

Selon une caractéristique particulière, l'on détecte si la motorisation termine la fermeture, en analysant la courbe enveloppe de courant consommé par la motorisation en fonction du temps, pour la réalisation du réarmement après la manœuvre de fermeture du mécanisme de commande, et en vérifiant si la durée de ce courant a augmenté par rapport à une durée de courant dite normale correspondant à une fermeture complète, cette augmentation de la durée du courant étant caractéristique d'une usure du mécanisme, de la cinématique, ou d'une fermeture incomplète indépendante de toute usure.

On notera que la cinématique comporte les pièces situées entre le mécanisme et les contacts, et qui transmettent les mouvements fournis par le mécanisme aux contacts mobiles.

Selon une autre caractéristique, l'on détecte si la motorisation est confrontée à un couple de réarmement normal ou particulièrement élevé, en analysant la courbe enveloppe de courant consommé par la motorisation en fonction du temps, afin de réaliser le réarmement après la manœuvre de fermeture du mécanisme de commande, et en vérifiant si le niveau de courant a augmenté par rapport au niveau de courant dit normal correspondant au cas où il n'y a ni usure de la motorisation, ni usure des pièces spécifiques du mécanisme impliquées dans la compression du ressort de fermeture.

Selon une autre caractéristique, l'on compare la courbe enveloppe de courant consommé par la motorisation pour le réarmement avec une courbe enveloppe de courant dite standard correspondant à la courbe enveloppe de courant consommé par la motorisation lorsque la fermeture réalisée par le mécanisme de commande est complète, et à en déduire si la fermeture a été complète ou non.

Selon une autre caractéristique, l'on définit une fourchette de durée du courant traversant la motorisation, et pour toute durée de courant située à l'intérieur de cette fourchette, on en déduit un fonctionnement normal sans usure de la motorisation et des pièces spécifiques du mécanisme permettant la compression du ressort de fermeture.

Selon une autre caractéristique, l'on définit une enveloppe délimitée par deux courbes enveloppe de courant dites d'extrémité, et toute courbe enveloppe de courant située à l'intérieure de cette enveloppe entre ces deux courbes enveloppe, traduit un fonctionnement normal de la motorisation et des pièces impliquées dans la compression du ressort de fermeture.

La présente invention a encore pour objet un dispositif de détection pour la mise en œuvre d'un procédé comportant les caractéristiques précédemment mentionnées prises seules ou en combinaison, ce dispositif étant caractérisé en ce qu'il comporte des moyens de détection de courant branchés sur les moyens d'alimentation de puissance de la motorisation, et un algorithme de traitement apte à comparer la courbe enveloppe de courant consommé par la motorisation pour le réarmement, en fonction du temps, avec une courbe enveloppe de courant dite normale correspondant à une fermeture complète réalisée par le mécanisme de commande et/ou à un couple de réarmement normal.

Selon une autre caractéristique, ce dispositif comporte des moyens de détection de courant branchés sur les moyens d'alimentation de puissance de la motorisation, et un algorithme de traitement apte à comparer la courbe enveloppe de courant consommé par la motorisation pour le réarmement, en fonction du temps, avec les deux courbes enveloppe d'extrémités précitées et/ou avec la fourchette de durée normale précitée, et à déterminer si cette courbe enveloppe de courant consommé se trouve à l'intérieur de l'enveloppe précitée ou bien à l'extérieur, ou bien si la durée de courant se trouve à l'intérieur de la fourchette ou en dehors.

Selon une autre caractéristique, les moyens de réarmement précités comportent des moyens pour emmagasiner l'énergie de fermeture dans le mécanisme de commande.

Selon une autre caractéristique, ce dispositif comporte des moyens de signalisation localement ou à distance de la détection de l'une des usures précitées.

La présente invention a encore pour objet un appareil de coupure électrique, cet appareil étant caractérisé en ce qu'il comporte un dispositif de détection comportant les caractéristiques précédemment mentionnées prises seules ou en combinaison.

Selon une autre caractéristique, cet appareil est un disjoncteur du type OFO, comportant des moyens de réarmement du mécanisme de commande du disjoncteur aptes à ramener le mécanisme dans une position prête à fermer, après une manœuvre de fermeture.

Mais d'autres avantages et caractéristiques de l'invention apparaîtront mieux dans la description détaillée qui suit et se réfère aux dessins annexés donnés uniquement à titre d'exemple et dans lesquels :

### DESCRIPTION DES FIGURES

- Les figures 1 à 3 sont trois représentations graphiques illustrant des courbes représentant le courant consommé par la motorisation pendant le réarmement en fonction de la durée de réarmement.
- La figure 1 est une courbe enveloppe illustrant le courant consommé par la motorisation pendant le réarmement en fonction de la durée de réarmement, lors d'un fonctionnement normal de l'appareil de coupure,
- La figure 2 illustre deux courbes correspondant pour l'une, à un fonctionnement normal de l'appareil, et pour l'autre, à une fermeture incomplète des contacts de l'appareil, et
- La figure 3 illustre deux courbes correspondant pour l'une, à un fonctionnement normal, et pour l'autre, à un couple de réarmement élevé.

### DESCRIPTION DETAILLEE DE PLUSIEURS MODES DE REALISATION DE L'INVENTION.

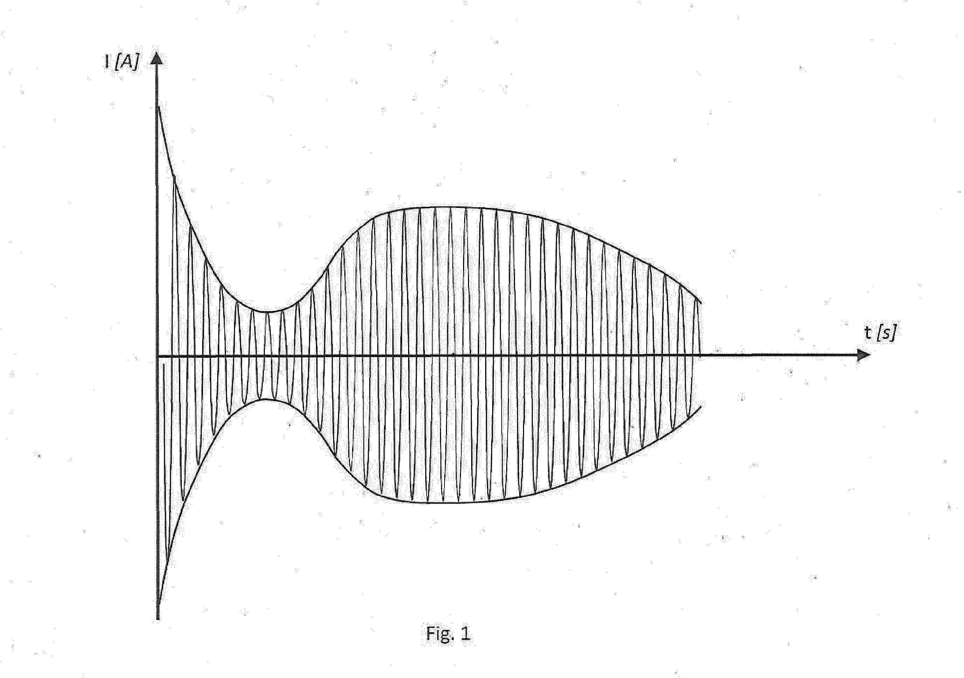

Sur la figure 1, est représentée une courbe enveloppe représentant le courant consommé par une motorisation, ladite motorisation étant destinée à réaliser le réarmement d'un mécanisme de commande des contacts d'un appareil de coupure tel un disjoncteur moyenne tension, en fonction de la durée de ce réarmement.

Plus précisément, ces moyens de réarmement comportent des moyens pour emmagasiner l'énergie de fermeture dans le mécanisme de commande de manière à amener ce mécanisme de commande dans une position dans laquelle il est prêt à fermer les contacts de l'appareil. Avantageusement, ces moyens de réarmement comportent un ressort de fermeture.

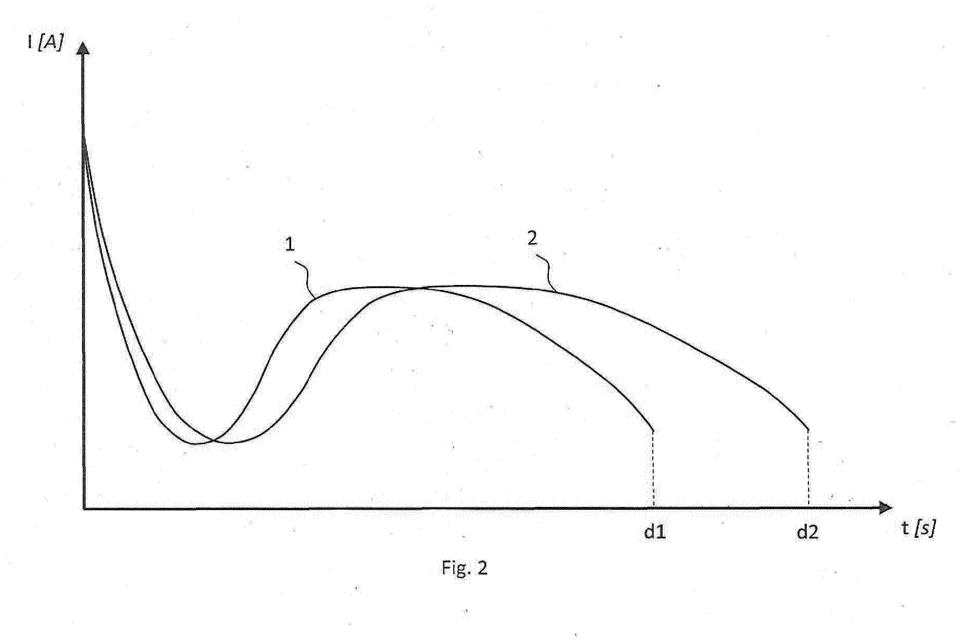

Sur la figure 2, la première courbe 1 correspond à un fonctionnement normal sans usure à l'intérieur de l'appareil de coupure, tandis que la seconde courbe 2 correspond à une fermeture incomplète des contacts de l'appareil suite à une usure du mécanisme, de la cinématique, ou bien une fermeture incomplète des contacts de l'appareil indépendante de toute usure, telle qu'une fermeture incomplète suite à une utilisation à basse température.

Tel qu'illustré sur cette figure 2, la durée de réarmement d2 est plus élevée dans le cas de la seconde courbe 2, correspondant à une fermeture incomplète des contacts, que dans le cas de la première courbe 1, correspondant à un fonctionnement normal de l'appareil.

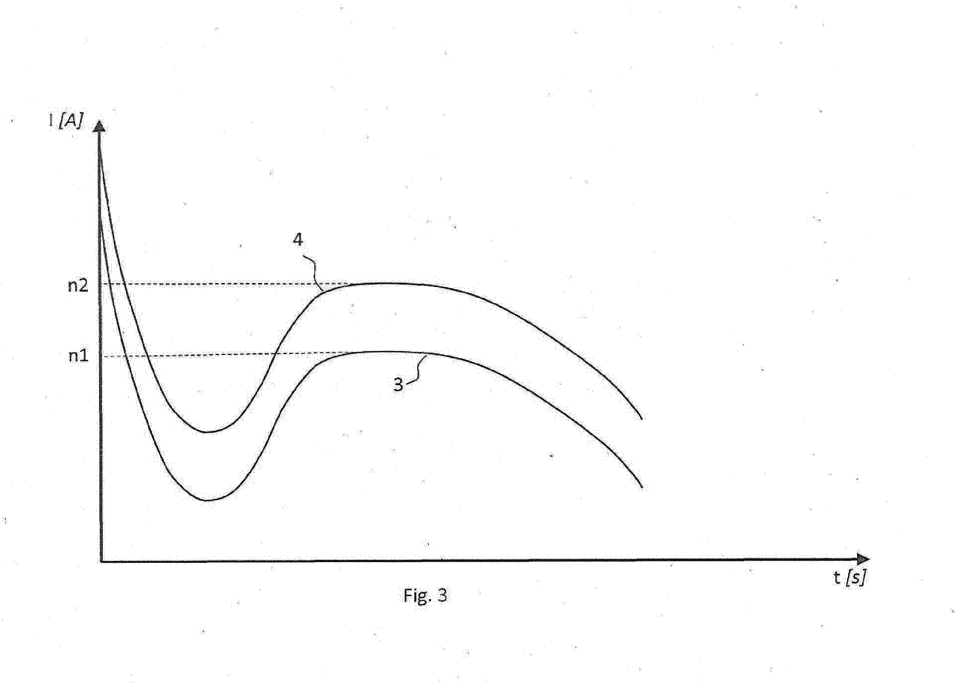

Sur la figure 3, la courbe 3 correspond à un fonctionnement normal de l'appareil, tandis que la courbe 4 correspond à un appareil de coupure présentant une usure de la motorisation ou spécifiquement des pièces du mécanisme permettant la compression du ressort de fermeture. Ainsi, il apparaît que, sur la courbe 4, le niveau maximum n2 de courant consommé par la motorisation est plus élevé que celui n1 de la courbe 3.

Selon une première réalisation du procédé selon l'invention telle qu'illustrée sur la figure 2, l'on détecte une fermeture incomplète, caractéristique d'une usure du mécanisme de commande, de la cinématique de l'appareil de coupure, ou bien d' une fermeture incomplète indépendante de toute usure, telle que suite à une utilisation à basse température, en comparant les deux courbes 1 et 2, et en détectant une durée de réarmement d2 plus importante par rapport à celle d1 habituellement observée lors d'un fonctionnement normal de l'appareil.

Selon une seconde réalisation (non illustrée) du procédé selon l'invention, l'on définit une fourchette, ou bien un intervalle de deux valeurs de durée de courant de réarmement, et l'on compare la durée de réarmement d2 correspondant à la courbe analysée, avec cette fourchette ou étendue.

De la même manière, tel qu'illustré sur la figure 3, l'on détecte un couple de réarmement anormalement élevé en comparant deux courbes représentant respectivement pour l'une, le courant de réarmement en fonction du temps de réarmement, lors d'un fonctionnement normal de l'appareil, et pour l'autre, le courant de réarmement en fonction du temps de réarmement en présence d'une usure de la motorisation ou spécifiquement des pièces du mécanisme permettant la compression du ressort de fermeture, et en détectant une différence entre les deux niveaux n1,n2 maximum de courant.

Selon une autre réalisation non représentée, l'on définit une enveloppe délimitée par deux courbes enveloppe de courant dites d'extrémité, et toute courbe enveloppe de courant située à l'intérieure de cette enveloppe entre ces deux courbes enveloppe, traduit un fonctionnement normal de la motorisation et des pièces impliquées dans la compression du ressort de fermeture.

Le dispositif de détection selon une réalisation particulière de l'invention comporte des moyens de détection de courant branchés sur les moyens d'alimentation de puissance de la motorisation, et un algorithme de traitement apte à comparer la courbe enveloppe de courant consommé par la motorisation pour le réarmement, en fonction du temps, avec une courbe enveloppe correspondant à un fonctionnement normal de l'appareil, ou bien avec les deux courbes enveloppe d'extrémités précitées, et à déterminer si cette courbe enveloppe de courant consommé se trouve à l'intérieur de l'enveloppe précitée ou bien à l'extérieur.

Ou bien à comparer la durée de réarmement avec la fourchette de durée normale précitée et à déterminer si la durée de courant se trouve à l'intérieur de la fourchette ou en dehors.

La présente invention permet ainsi de détecter toute manœuvre de fermeture incomplète d'un disjoncteur qui peut affecter la performance de l'appareil et la sécurité des personnes.

## Revendications

1. Procédé de détection d'une pression de contact insuffisante entre les deux contacts d'un appareil de coupure électrique, ledit appareil comportant des moyens de réarmement du mécanisme de commande de l'appareil de coupure après une fermeture du mécanisme, ces moyens de réarmement comportant des moyens de compression d'un ressort de fermeture destiné à amener le mécanisme de commande de l'appareil dans une position dans laquelle il est prêt à fermer, ces moyens de réarmement comportant également une motorisation, apte à terminer la manœuvre de fermeture du mécanisme de commande, en cas de fermeture incomplète réalisée par ce dernier et avant de réaliser le réarmement, cette insuffisance de pression de contact étant due à une usure du mécanisme, de la cinématique, de la motorisation, des pièces impliquées dans la compression du ressort de fermeture, ou d'une fermeture incomplète indépendante de toute usure, le procédé consistant à détecter si la motorisation termine la fermeture et/ou si le couple de réarmement correspond à un couple de réarmement dit normal, en analysant la courbe enveloppe de courant (2 ,4) consommé par la motorisation en fonction du temps, pour la réalisation du réarmement après la manœuvre de fermeture du mécanisme de commande, et si la motorisation termine la fermeture, en déduire que l'usure est due à une usure du mécanisme, de la cinématique ou bien de la motorisation, et/ou si le couple de réarmement correspond à un couple de réarmement anormal, en déduire que l'usure correspond à une usure de la motorisation ou bien des pièces impliquées dans la compression du ressort de fermeture, **caractérisé en ce que** le procédé permet de distinguer une usure du mécanisme, de la cinématique, une fermeture incomplète indépendante de toute usure, d'une usure de la motorisation ou des pièces spécifiques du mécanisme permettant la compression du ressort de fermeture.

2. Procédé de détection selon la revendication 1, **caractérisé en ce que** l'on détecte si la motorisation termine la fermeture, en analysant la courbe enveloppe de courant (2) consommé par la motorisation en fonction du temps, pour la réalisation du réarmement après la manœuvre de fermeture du mécanisme de commande, et en vérifiant si la durée (d2) de ce courant a augmenté par rapport à une durée de courant dite normale (d1) correspondant à une fermeture complète, cette augmentation de la durée du courant étant caractéristique d'une usure du mécanisme, de la cinématique, ou d'une fermeture incomplète indépendante de toute usure.

3. Procédé de détection selon la revendication 1 ou 2, **caractérisé en ce que** l'on détecte si la motorisation est confrontée à un couple de réarmement normal ou particulièrement élevé, en analysant la courbe enveloppe de courant (4) consommé par la motorisation en fonction du temps, afin de réaliser le réarmement après la manœuvre de fermeture du mécanisme de commande, et en vérifiant si le niveau de courant n2 a augmenté par rapport au niveau de courant n1 dit normal correspondant au cas où il n'y a ni usure de la motorisation, ni usure des pièces spécifiques du mécanisme impliquées dans la compression du ressort de fermeture.

4. Procédé de détection selon la revendication 2, **caractérisé en ce que** l'on compare la courbe enveloppe de courant (2) consommé par la motorisation pour le réarmement avec une courbe enveloppe de courant dite standard (1) correspondant à la courbe enveloppe de courant consommé par la motorisation lorsque la fermeture réalisée par le mécanisme de commande est complète, et à en déduire si la fermeture a été complète ou non.

5. Procédé de détection selon la revendication 2, **caractérisé en ce que** l'on définit une fourchette de durée du courant traversant la motorisation, et pour toute durée de courant située à l'intérieur de cette fourchette, on en déduit un fonctionnement normal sans usure de la motorisation et des pièces spécifiques du mécanisme permettant la compression du ressort de fermeture.

6. Procédé de détection selon la revendication 3, **caractérisé en ce que** l'on définit une enveloppe délimitée par deux courbes enveloppe de courant dites d'extrémité, et toute courbe enveloppe de courant située à l'intérieure de cette enveloppe entre ces deux courbes enveloppe, traduit un fonctionnement normal de la motorisation et des pièces impliquées dans la compression du ressort de fermeture.

7. Dispositif de détection pour la mise en œuvre d'un procédé selon l'une quelconque des revendications 1 à 6, **caractérisé en ce qu'**il comporte des moyens de détection de courant branchés sur les moyens d'alimentation de puissance de la motorisation, et un algorithme de traitement apte à comparer la courbe enveloppe de courant consommé par la motorisation pour le réarmement, en fonction du temps, avec une courbe enveloppe de courant dite normale correspondant à une fermeture complète réalisée par le mécanisme de commande et/ou à un couple de réarmement normal.

8. Dispositif de détection selon la revendication 7, **caractérisé en ce qu'**il comporte des moyens de détection de courant branchés sur les moyens d'alimentation de puissance de la motorisation, et un algorithme de traitement apte à comparer la courbe enveloppe de courant consommé par la motorisation pour le réarmement, en fonction du temps, avec les deux courbes enveloppe d'extrémités précitées et/ou avec la fourchette de durée normale précitée, et à déterminer si cette courbe enveloppe de courant consommé se trouve à l'intérieur de l'enveloppe précitée ou bien à l'extérieur, ou bien si la durée de courant se trouve à l'intérieur de la fourchette ou en dehors.

9. Dispositif de détection selon la revendication 7 ou 8, **caractérisé en ce que** les moyens de réarmement précités comportent des moyens pour emmagasiner l'énergie de fermeture dans le mécanisme de commande.

10. Dispositif de détection selon l'une quelconque des revendications 7 à 9, **caractérisé en ce qu'**il comporte des moyens de signalisation localement ou à distance de la détection de l'une des usures précitées.

11. Appareil de coupure électrique, **caractérisé en ce qu'**il comporte un dispositif de détection selon l'une quelconque des revendications 7 à 10.

12. Appareil de coupure électrique selon la revendication 11, **caractérisé en ce que** c'est un disjoncteur du type OFO, comportant des moyens de réarmement du mécanisme de commande du disjoncteur aptes à ramener le mécanisme dans une position prête à fermer, après une manœuvre de fermeture.

## Patentansprüche

1. Verfahren zur Detektion eines unzureichenden Kontaktdrucks zwischen den zwei Kontakten eines Stromunterbrechungsgeräts, wobei das Gerät Mittel zur Rückstellung des Betätigungsmechanismus des Unterbrechungsgeräts nach einer Schließung des Mechanismus aufweist, wobei diese Rückstellmittel Mittel zum Zusammendrücken einer Schließfeder aufweist, die dazu bestimmt ist, den Betätigungsmechanismus des Geräts in eine Position zu bringen, in der er schließbereit ist, wobei diese Rückstellmittel ebenfalls eine Motorisierung aufweisen, die geeignet ist, das Schließmanöver des Betätigungsmechanismus im Falle einer unvollständigen Schließung, die von letzterem durchgeführt wird, und vor der Durchführung der Rückstellung, wobei dieser Kontaktdruckmangel von einem Verschleiß des Mechanismus, der Kinematik, der Motorisierung, der am Zusammendrücken der Schließfeder beteiligten Teile herrührt, oder einer verschleißunabhängigen unvollständigen Schließung zu beenden,
wobei das Verfahren darin besteht, zu detektieren, ob die Motorisierung die Schließung beendet und/oder ob das Rückstelldrehmoment einem normalen Rückstelldrehmoment entspricht, indem die Hüllkurve eines Stroms (2, 4) analysiert wird, der von der Motorisierung in Abhängigkeit von der Zeit für die Durchführung der Rückstellung nach dem Schließmanöver des Betätigungsmechanismus verbraucht wird, und wenn die Motorisierung die Schließung beendet, davon ableiten, dass der Verschleiß von einem Verschleiß des Mechanismus, der Kinematik oder der Motorisierung herrührt, und/oder wenn das Rückstelldrehmoment einem anormalen Rückstelldrehmoment entspricht, davon ableiten, dass der Verschleiß einem Verschleiß der Motorisierung oder der am Zusammendrücken der Schließfeder beteiligten Teile herrührt,
**dadurch gekennzeichnet, dass** es das Verfahren gestattet, einen Verschleiß des Mechanismus, der Kinematik, eine verschleißunabhängige unvollständige Schließung, von einem Verschleiß der Motorisierung oder der spezifischen Teile des Mechanismus, die das Zusammendrücken der Schließfeder gestatten, zu unterscheiden.

2. Detektionsverfahren nach Anspruch 1, **dadurch gekennzeichnet, dass** detektiert wird, ob die Motorisierung die Schließung beendet, indem die Hüllkurve eines Stroms (2) analysiert wird, der von der Motorisierung in Abhängigkeit von der Zeit für die Durchführung der Rückstellung nach dem Schließmanöver des Betätigungsmechanismus verbraucht wird, und indem überprüft wird, ob sich die Zeitdauer (d2) dieses Stroms im Verhältnis zu einer normalen Stromzeitdauer (d1) erhöht hat, die einer vollständigen Schließung entspricht, wobei diese Erhöhung der Zeitdauer des Stroms für einen Verschleiß des Mechanismus, der Kinematik oder eine verschleißunabhängige unvollständige Schließung charakteristisch ist.

3. Detektionsverfahren nach Anspruch 1 oder 2, **dadurch gekennzeichnet, dass** detektiert wird, ob die Motorisierung mit einem normalen oder besonders hohen Rückstelldrehmoment konfrontiert ist, indem die Hüllkurve eines Stroms (4) analysiert wird, der von der Motorisierung in Abhängigkeit von der Zeit verbraucht wird, um die Rückstellung nach dem Schließmanöver des Betätigungsmechanismus durchzuführen, und indem überprüft wird, ob sich der Strompegel n2 im Verhältnis zum normalen Strompegel n1 erhöht hat, der dem Fall entspricht, dass weder Verschleiß der Motorisierung noch Verschleiß der spezifischen Teile des Mechanismus, die am Zusammendrücken der Schließfeder beteiligt sind, vorliegt.

4. Detektionsverfahren nach Anspruch 2, **dadurch gekennzeichnet, dass** die Hüllkurve eines Stroms (2), der von der Motorisierung für die Rückstellung verbraucht wird, mit einer Standard-Stromhüllkurve (1) verglichen wird, die der Hüllkurve eines Stroms entspricht, der von der Motorisierung verbraucht wird, wenn die Schließung, die vom Betätigungsmechanismus durchgeführt wird, vollständig ist, und es wird daraus abgeleitet, ob die Schließung vollständig war oder nicht.

5. Detektionsverfahren nach Anspruch 2, **dadurch gekennzeichnet, dass** eine Spanne einer Zeitdauer des Stroms festgelegt wird, der die Motorisierung durchströmt, und für jede Stromzeitdauer, die innerhalb dieser Spanne liegt, davon ein normaler Betrieb ohne Verschleiß der Motorisierung und der spezifischen Teile des Mechanismus, die das Zusammendrücken der Schließfeder gestatten, abgeleitet wird.

6. Detektionsverfahren nach Anspruch 3, **dadurch gekennzeichnet, dass** eine Hüllkurve festgelegt wird, die von zwei End-Stromhüllkurven begrenzt wird, und jede Stromhüllkurve, die innerhalb dieser Hüllkurve zwischen diesen zwei Hüllkurven liegt, einen normalen Betrieb der Motorisierung und der am Zusammendrücken der Schließfeder beteiligten Teile bedeutet.

7. Detektionsvorrichtung für die Umsetzung eines Verfahren nach einem der Ansprüche 1 bis 6, **dadurch gekennzeichnet, dass** sie Stromdetektionsmittel, die an die Stromversorgungsmittel der Motorisierung angeschlossen sind, und einen Verarbeitungsalgorithmus aufweist, der geeignet ist, die Hüllkurve eines Stroms, der von der Motorisierung für die Rückstellung in Abhängigkeit von der Zeit verbraucht wird, mit einer normalen Stromhüllkurve zu vergleichen, die einer vollständigen Schließung, die vom Betätigungsmechanismus durchgeführt wird, und/oder einem normalen Rückstelldrehmoment entspricht.

8. Detektionsvorrichtung nach Anspruch 7, **dadurch gekennzeichnet, dass** sie Stromdetektionsmittel, die an die Stromversorgungsmittel der Motorisierung angeschlossen sind, und einen Verarbeitungsalgorithmus aufweist, der geeignet ist, die Hüllkurve eines Stroms, der von der Motorisierung für die Rückstellung in Abhängigkeit von der Zeit verbraucht wird, mit den zwei vorgenannten End-Hüllkurven und/oder mit der vorgenannten normalen Zeitdauerspanne zu vergleichen, und zu bestimmen, ob diese Hüllkurve verbrauchten Stroms innerhalb der vorgenannten Hüllkurve oder außerhalb liegt, oder ob die Stromzeitdauer innerhalb der Spanne oder außerhalb liegt.

9. Detektionsvorrichtung nach Anspruch 7 oder 8, **dadurch gekennzeichnet, dass** die vorgenannten Rückstellmittel Mittel zur Speicherung der Schließenergie im Betätigungsmechanismus aufweisen.

10. Detektionsvorrichtung nach einem der Ansprüche 7 bis 9, **dadurch gekennzeichnet, dass** sie Mittel zur lokalen oder entfernten Signalisierung der Detektion einer der vorgenannten Verschleiße aufweist.

11. Stromunterbrechungsgerät, **dadurch gekennzeichnet, dass** es eine Detektionsvorrichtung nach einem der Ansprüche 7 bis 10 aufweist.

12. Stromunterbrechungsgerät nach Anspruch 11, **dadurch gekennzeichnet, dass** es ein Schutzschalter vom OCO-Typ ist, der Mittel zur Rückstellung des Betätigungsmechanismus des Schutzschalters aufweist, die geeignet sind, den Mechanismus nach einem Schließmanöver in eine schließbereite Position zurückzubringen.

## Claims

1. Method for detecting insufficient contact pressure between the two contacts of an electrical switching unit, said unit comprising means for resetting the mechanism for controlling the switching unit following closure of the mechanism, said resetting means comprising means for compressing a closure spring intended to bring the mechanism for controlling the unit to a position in which it is ready to close, said resetting means also comprising a motor able to complete the closure manoeuvre of the control mechanism, in the event of incomplete closure by said control mechanism and before carrying out the resetting, said insufficient contact pressure being the result of wear in the mechanism, the kinematic chain, the motor, the parts involved in compressing the closure spring, or in the event of incomplete closure independent of any wear,
the method consisting in detecting whether the motor completes the closure and/or whether the resetting torque corresponds to a resetting torque called normal resetting torque, by analysing the envelope curve of current (2, 4) consumed by the motor over time, in order to carry out the resetting following the closure manoeuvre of the control mechanism, and, if the motor completes the closure, deducing therefrom that the wear is the result of wear in the mechanism, in the kinematic chain or in the motor, and/or if the resetting torque corresponds to an abnormal resetting torque, deducing therefrom that the wear corresponds to wear in the motor or in the parts involved in compressing the closure spring,
**characterized in that** the method makes it possible to distinguish between wear in the mechanism, in the kinematic chain, incomplete closure independent of any wear, wear in the motor or in specific parts of the mechanism for compressing the closure spring.

2. Detection method according to Claim 1, **characterized in that** it is detected whether the motor has completed the closure by analysing the envelope curve of current (2) consumed by the motor over time, in order to carry out the resetting following the closure manoeuvre of the control mechanism, and by verifying whether the duration (d2) of this current has increased with respect to a current duration, called normal duration (d1), corresponding to complete closure, with this increase in the duration of the current being characteristic of wear in the mechanism, in the kinematic chain, or of incomplete closure independent of any wear.

3. Detection method according to Claim 1 or 2, **characterized in that** it is detected whether the motor has encountered a normal or particularly high resetting torque by analysing the envelope curve of current (4) consumed by the motor over time, in order to complete the resetting following the closure manoeuvre of the control mechanism, and by verifying whether the current level n2 has increased with respect to the current level n1, called normal level, corresponding to the case where there is neither wear in the motor nor wear in the specific parts of the mechanism involved in compressing the closure spring.

4. Detection method according to Claim 2, **characterized in that** the envelope curve of current (2) consumed by the motor for the resetting operation is compared with an envelope curve of current (1), called standard curve, corresponding to the envelope curve of current consumed by the motor when the closure carried out by the control mechanism is complete, and it is deduced therefrom whether or not the closure has been completed.

5. Detection method according to Claim 2, **characterized in that** a range of duration of the current passing through the motor is defined and, for any current duration found within this range, it is deduced therefrom that there is normal operation without wear in the motor and in the specific parts of the mechanism for compressing the closure spring.

6. Detection method according to Claim 3, **characterized in that** an envelope is defined that is delimited by two envelope curves of current, called end curves, and any envelope curve of current located within this envelope between these two envelope curves expresses normal operation of the motor and of the parts involved in compressing the closure spring.

7. Detection device for implementing a method according to any one of Claims 1 to 6, **characterized in that** it comprises current detection means that are connected to the means for supplying power to the motor, and a processing algorithm able to compare the envelope curve of current consumed by the motor for the resetting, over time, with an envelope curve of current, called normal curve, corresponding to complete closure carried out by the control mechanism and/or to a normal resetting torque.

8. Detection device according to Claim 7, **characterized in that** it comprises current detection means that are connected to the means for supplying power to the motor, and a processing algorithm able to compare the envelope curve of current consumed by the motor for the resetting, over time, with the two aforementioned end envelope curves and/or with the aforementioned normal range of duration, and able to determine whether this envelope curve of consumed current is found within or outside the aforementioned envelope, or whether the current duration is found within or outside the range.

9. Detection device according to Claim 7 or 8, **characterized in that** the aforementioned resetting means comprise means for storing the closure energy in the control mechanism.

10. Detection device according to any one of Claims 7 to 9, **characterized in that** it comprises means for locally or remotely signalling the detection of one of the aforementioned wear conditions.

11. Electrical switching unit, **characterized in that** it comprises a detection device according to any one of Claims 7 to 10.

12. Electrical switching unit according to Claim 11, **characterized in that** it is a circuit breaker of OCO type, comprising means for resetting the control mechanism of the circuit breaker that are able to return the mechanism to a position in which it is ready to close, following a closure manoeuvre.
